# EUROPÄISCHE PATENTSCHRIFT

(11) **EP 3 414 113 B1**
(45) Veröffentlichungstag und Bekanntmachung des Hinweises auf die Patenterteilung: **22.05.2024**
(21) Anmeldenummer: 17707755.9
(22) Anmeldetag: 01.02.2017
(51) Int. Cl.: B60G 7/00, B60G 9/00, F16B 2/00

(54) **FAHRWERK FÜR EIN NUTZFAHRZEUG**
CHASSIS FOR A UTILITY VEHICLE
CHÂSSIS POUR VÉHICULE UTILITAIRE

(30) Priorität: 10.02.2016 DE 102016102289
(43) Veröffentlichungstag der Anmeldung: 19.12.2018
(73) Patentinhaber: BPW Bergische Achsen KG, 51674 Wiehl (DE)
(72) Erfinder: FINK, Kira, 51674 Wiehl (DE); PICKER, Heinrich, 42499 Hückeswagen (DE); MICHELS, Manfred, 51067 Köln (DE)
(74) Vertreter: DREISS Patentanwälte PartG mbB
(86) Internationale Anmeldenummer: PCT/DE2017/100065
(87) Internationale Veröffentlichungsnummer: WO 2017/137034

(56) Entgegenhaltungen:
- EP-B1- 2 355 988
- DE-A1- 10 118 696
- DE-A1-102005 031 753
- DE-A1-102005 038 275
- DE-A1-102013 003 300
- DE-A1-102013 021 383
- DE-A1-102014 008 408
- US-A- 1 377 430
- US-A- 3 913 937
- US-A1- 2009 212 523
- ANDREW DUNN ET AL: "Nanosecond laser texturing for high friction applications", OPTICS AND LASERS IN ENGINEERING, Bd. 62, 29. Mai 2014 (2014-05-29), Seiten 9-16, XP055363681, AMSTERDAM, NL ISSN: 0143-8166, DOI: 10.1016/j.optlaseng.2014.05.003

## Beschreibung

Die Erfindung betrifft ein Fahrwerk für ein Nutzfahrzeug mit einem sich quer zur Fahrzeuglängsrichtung erstreckenden ersten Fahrwerkselement und einem auf dessen Außenseite befestigten zweiten Fahrwerkselement, wobei das zweite Fahrwerkselement über mindestens einen aufgerauten Stützbereich gegen die Außenseite des ersten Fahrwerkselements abgestützt ist.

Auf dem technischen Gebiet der Nutzfahrzeug-Fahrwerke sind Verbindungen zwischen einem ersten, sich quer zur Fahrzeuglängsrichtung erstreckenden Element des Nutzfahrzeug-Fahrwerks und einem auf dessen Außenseite befestigten zweiten Element des Fahrwerks bekannt, z. B. aus der EP 2 355 988 B1 , der WO 2011/146163 A und der DE 10 2014 008 408 A1. Darin beschrieben ist jeweils die Verbindung zwischen einem Achskörper und den der Führung des Achskörpers dienenden Achslenkern bzw. Längslenkern des Nutzfahrzeug-Fahrwerks. Das äußere, also das umschließende Fahrwerkselement ist mit einer aufgerauten Oberflächenstruktur versehen. Diese ist dafür ausgebildet, sich in die Außenseite des inneren Fahrwerkselements, hier also des Achskörpers, einzugraben, um so zu einer verbesserten Verbindung der Fahrwerksteile zu gelangen.

Aus der DE 10 2013 003 300 A1 ist eine Achsaufhängung für Nutzfahrzeuge bekannt, bei der die Befestigung des als Vierkantrohr ausgebildeten Achskörpers ausschließlich durch Klemmen erfolgt, wobei der Achskörper zwischen einem vorderen Achslenker und einem hinteren Achslenkerabschnitt, welcher eine Luftfeder aufnimmt, verklemmt wird. Zur Übertragung der Klemmkräfte ist der Achslenker an seinem hinteren Ende mit einer Schale versehen, die sich über einen Teilumfang des Achskörpers erstreckt und gegen diesen abgestützt ist. Diese Abstützung erfolgt ausschließlich über einzelne, innen an der Schale ausgebildete, leistenförmige Stützbereiche, die sich überwiegend in Längsrichtung des Achskörpers erstrecken. Auf den übrigen Bereichen der Schalen findet kein nennenswerter Kontakt zwischen Achslenker und Achskörper statt.

Die Bauart nach der DE 10 2013 003 300 A1 hat sich für die Klemmverbindung zwischen einem Achslenker und einem Achskörper als insgesamt vorteilhaft herausgestellt, da eine gewisse Grundelastizität der Verbindung erzielt wird. Allerdings kann es zu Relativbewegungen der beteiligten Fahrwerksteile kommen, was unter bestimmten Umständen zu einem Versatz in Längsrichtung des Achskörpers führen kann, oder auch in Umfangsrichtung des Achskörpers. Ein solcher Versatz und vor allem ein sich dauerhaft einstellender Versatz ist bei den Fahrwerksteilen eines Nutzfahrzeug-Fahrwerks unerwünscht.

Aus der DE 101 18 696 A1 ist eine Achseinbindung für gefederte Fahrzeugachsen mit einem Achsrohr bekannt, an dem unter Zwischenschaltung einer Achsplatte (8) ein Achslenker vorgesehen ist. Um eine Achseinbindung zu schaffen, die auch im Falle einer verringerten Vorspannung zur Übertragung hoher Momente zwischen Achsrohr und Längslenker geeignet ist, ist die Achsplatte im Bereich der Anlage des Achsrohrs mit einer zahnartigen Struktur aus zu dem Achsrohr hin gerichteten Vorsprüngen versehen.

Aus der DE 10 2005 031 753 A1 ist eine Bremsträgeranordnung mit einem starr an einer Fahrzeugachseangeordneten und diese im wesentlichen kreis- oder teilkreisförmig umgebenden Montageelement bekannt, an welchem ein Bremsträger einer Fahrzeugbremse in unterschiedlichen Winkelstellungen verdrehsicher befestigbar ist. Dabei ist vorgesehen, dass das Montageelement auf seinem Umfang mit einer Vielzahl gleichartiger Formschlußelemente für den Formschluß mit dem Bremsträger versehen ist.

Die EP 2 355 988 B1 offenbart ein Fahrwerk entsprechend den Merkmalen des Oberbegriffs des Anspruchs 1.

Der Erfindung liegt daher die **Aufgabe** zugrunde, bei einem Nutzfahrzeug-Fahrwerk Relativbewegungen zwischen den durch Klemmkräfte verbundenen Fahrwerksteilen zu vermeiden.

Gelöst wird diese Aufgabe durch ein Fahrwerk mit den Merkmalen des Patentanspruchs 1.

Es hat sich herausgestellt, dass es durch die in einem Strahlverfahren hergestellte Oberflächenstruktur zu einem besonders festen Sitz in den Zonen unmittelbaren Kontakts zwischen dem innen an dem zweiten Fahrwerkselement ausgebildeten Stützbereich und der Außenseite und damit Oberfläche des ersten Fahrwerkselements kommt

Die durch das Strahlverfahren, nämlich eine Laserstrahlbearbeitung, erzeugte Oberflächenstruktur weist eine größere Härte als der Ausgangswerkstoff auf und insbesondere eine Oberflächenhärte, aufgrund deren sich die hervorstehenden Spitzen der durch die Bearbeitung erzeugten Oberflächenstruktur in das gegenüberliegende Material eingraben. Es kommt also, zusätzlich zu der Klemmverbindung, zu einem Formschluss im Mikrobereich. Dieser Effekt ist dann besonders stark, wenn die Oberfläche des innen angeordneten, ersten Fahrwerkselements keine vergleichbar hohe Materialhärte aufweist.

Mit dem erfindungsgemäßen Fahrwerk wird daher ein sicheres Übertragen der Betriebskräfte von dem einen auf das andere Fahrwerksteil gewährleistet, ohne dass es zu einem dauerhaften, d. h. bleibenden Versatz kommt, sei dies quer zur Fahrzeuglängsrichtung oder auch in Achsenumfangsrichtung.

Das die Aufrauhung aufweisende zweite Fahrwerkselement besteht vorzugsweise aus einem Sphäroeisenguss. Dieses Material ist für die Laserbearbeitung in besonderer Weise geeignet, da es durch die Bearbeitung zu einem Härten der Materialaußenseite kommt. Dies schafft die Voraussetzung dafür, dass die so gebildeten Spitzen hart genug sind, sich in das gegenüberliegende, weniger harte Material des umschlossenen Fahrwerkselements einzugraben.

Für das zweite Fahrwerkselement hat sich als besonders geeignet der Eisengusswerkstoff GJS erwiesen, insbesondere jener mit der Bezeichnung EN-GJS-600-3. Dieser zur Gruppe der Sphäroguss-Materialien gehörende Werkstoff zeichnet sich durch kugelförmig eingelagertes Graphit aus. Diese Materialstruktur bedingt eine hohe Festigkeit des Materials und hat beim Strukturieren mit einem Elektronenstrahl oder einem Laserstrahl den Vorteil, dass das umgeschmolzene Material im Bereich der Struktur eine sehr hohe Härte aufweist, bei gleichzeitig zähen Materialeigenschaften.

Ebenfalls geeignet ist der Sphäroeisenguss-Werkstoff GCS.

Beim Laserstrahlverfahren wird ein hochenergetischer Lichtstrahl aus monochromatischem, kohärentem Licht erzeugt. Durch eine Fokussierung erzeugt man eine Energiedichte >10^6 W/cm-²

Für die Laserstrahlbearbeitung existiert zwar eine Vielfalt an Laserstrahlquellen, die sich durch Wellenlängen, Pulsleistungen, Energiedichten mit Anwendungspotenzial unterscheiden. Diese Laserstrahlquellen können anhand des Mediums zur Strahlerzeugung kategorisiert werden. Dabei lassen sich Gaslaser, Flüssiglaser und Festkörperlaser unterscheiden.

Für das Verfahren der Oberflächenstrukturierung an Fahrwerkselementen hat sich der Bautyp des Festkörperlasers als besonders geeignet herausgestellt. Bevorzugt ist ein diodengepulster Hochleistungslaser mit einer Wellenlänge <1000 nm und einer maximalen Pulsenergie von 80 mJ.

Der für das Aufrauen eingesetzte Laser ist z. B. ein Hochleistungs-Nanosekundenlaser. Mit diesem hocheffizienten Kurzpulslaser wird im Fokusbereich des Laserstrahls so viel Energie in die bearbeitete Oberfläche des zweiten Fahrwerkselements eingebracht, dass durch diesen Impuls das aufgeschmolzene Material verdrängt wird, und im Stützbereich die spezielle, aufgeraute Oberflächenstruktur entsteht. Gleichzeitig wird im Stützbereich das Material, bedingt durch die schnelle Abkühlung, gehärtet. Bei einer Ausführungsform der Erfindung ist das zweite Fahrwerkselement eine Achsschale, die auf ihrer den aufgerauten Stützbereich aufweisenden Innenseite einen gebogenen Verlauf aufweist und als ein eigenständiges Bauteil zwischen dem ersten Fahrwerkselement und einem an dem Fahrzeugchassis des Nutzfahrzeugs schwenkbar gelagerten Achslenker angeordnet ist. Vorzugsweise weist die Achsschale auch auf ihrer dem Achslenker zugewandten Außenseite einen gebogenen Verlauf auf. Gemäß einer weiteren Ausgestaltung ist die Achsschale mit in Umfangsrichtung ihres Biegeverlaufs vorderen und hinteren Rändern versehen und an den Rändern mit Ausnehmungen versehen, durch die stangenförmige Zugelemente zumindest teilweise hindurchführen. Vorzugsweise sind die Ausnehmungen zum zumindest teilweisen Hindurchführen der stangenförmigen Zugelemente von U-förmiger oder V-förmiger Kontur.

Dabei ist erfindungsgemäß der mittels des Strahlverfahrens aufgeraute Stützbereich innen an einer Schale ausgebildet, die Bestandteil des zweiten Fahrwerkselements ist und sich über einen Teilumfang des ersten Fahrwerkselements erstreckt.

Ferner ist erfindungsgemäß das zweite Fahrwerkselement ein an dem Fahrzeugchassis des Nutzfahrzeugs schwenkbar gelagerter Achslenker.

Ferner ist erfindungsgemäß vorgesehen, dass sich der aufgeraute Stützbereich in Umfangsrichtung nur über einen Teilumfang der Schale erstreckt.

Ferner ist erfindungsgemäß vorgesehen, dass sich der aufgeraute Stützbereich, in Längsrichtung des ersten Fahrwerkselements, nur über einen Teil der Länge der Schale erstreckt. Weitere Vorteile und Einzelheiten ergeben sich aus der nachfolgenden Beschreibung von nicht beanspruchten Beispielen und einem beanspruchten Ausführungsbeispiel, welche auf der Zeichnung dargestellt sind. Darin zeigen:
Fig. 1 in einer Seitenansicht ein luftgefedertes Nutzfahrzeug-Fahrwerk mit, unter anderem, einem Achslenker sowie einem der Lagerung der Fahrzeugräder dienenden Achskörper;
Fig. 2 eine perspektivische Ansicht nur des Achslenkers;
Fig. 3 eine perspektivische Ansicht nur eines Achslenkerabschnitts, welcher der Befestigung der Luftfeder der luftgefederten Fahrzeugachse dient;
Fig. 4 in einer erfindungsgemäßen Ausführungsform eine perspektivische Ansicht nur des Achslenkers;
Fig. 5 in der erfindungsgemäßen Ausführungsform eine perspektivische Ansicht nur des Achslenkerabschnitts, welcher der Befestigung der Luftfeder dient;
Fig. 6 drei Schnitte durch einen an dem Achslenker ausgebildeten Kontaktbereich, und zwar vor der Bearbeitung, nach einer Vorbearbeitung durch Glätten des späteren Kontaktbereichs, sowie nach erfolgter Laserbearbeitung des Kontaktbereichs mit der Folge einer deutlich aufgerauten Oberflächenstruktur im Kontaktbereich;
Fig. 7 Schnitte im Kontaktbereich zwischen Achslenker und Achskörper, und zwar vor dem Aufbringen einer Klemmkraft sowie nach dem vollständigen Anziehen der Klemmverbindung;
Fig. 8 in einem anderen nicht beanspruchten Beispiel Schnitte im Kontaktbereich zwischen Achslenker und Achskörper, wiederum vor dem Aufbringen einer Klemmkraft sowie nach dem vollständigen Anziehen der Klemmverbindung;
Fig. 9 in perspektivischer Darstellung ein anderes nicht beanspruchtes Beispiel einer Achsaufhängung bei einem luftgefederten Nutzfahrzeug-Fahrwerk, wobei von dem Achskörper nur ein kurzer Achskörper-Abschnitt wiedergegeben ist;
Fig. 10 in einer Explosionsdarstellung einzelne Gegenstände der Achsaufhängung nach Fig. 9;

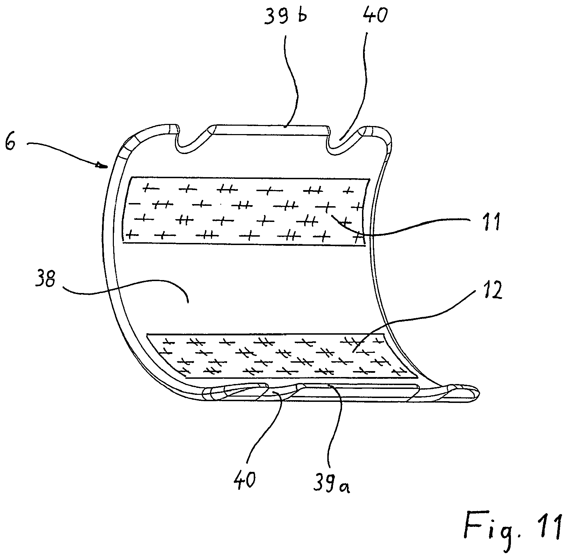

Fig. 11 in perspektivischer Darstellung nur die Achsschale der Achsaufhängung nach Fig. 9, und
Fig. 12 in perspektivischer Darstellung die Scheibenbremse des Fahrwerks, deren Bremsträger durch Klemmen auf dem hier als Rundrohr gestalteten Achskörper befestigbar ist, wobei die beteiligten Fahrwerkselemente in nicht-montiertem Zustand wiedergegeben sind.

Die im Folgenden beschriebene Achsaufhängung findet Anwendung vor allem bei luftgefederten Fahrzeugachsen mit langem, durchgehendem Achskörper. Derartige Fahrzeugachsen kommen vor allem bei Nutzfahrzeugen und insbesondere bei Lkw-Anhängern und -Aufliegern zum Einsatz. Die Achsen sind für hohe Transportgewichte und Belastungen im Straßenbetrieb ausgelegt.

Unter dem Fahrzeugrahmen eines hier nicht näher dargestellten Nutzfahrzeugfahrwerks ist auf jeder Fahrzeugseite eine Lenkerstütze 1 befestigt. Diese nimmt ein Schwenklager für die Achsaufhängung auf. Zur Führung des sich quer zur Fahrzeuglängsrichtung erstreckenden und hier von der einen Fahrzeugseite bis zur anderen Fahrzeugseite starr durchgehenden Achskörpers 2 dient auf jeder Fahrzeugseite ein Achslenker 5. Der Achslenker 5 weist an seinem vorderen Ende bei 1A einen Stützbereich auf mit einem einstückig angegossenen Lenkerauge, welches Bestandteil des Schwenklagers in der Lenkerstütze 1 ist, um mittels eines Bolzens den Achslenker 5 vertikal schwenkbar an der chassisfesten Lenkerstütze 1 zu halten

In Fahrtrichtung hinten ist der Achslenker mit einer Auflagefläche für eine Luftfeder 9 versehen. Die Luftfeder 9 stützt sich mit einer oberen Abschlussplatte von unten gegen den Fahrzeugrahmen ab.

Zur achsseitigen Befestigung der Luftfeder 9 ist der Achslenker 5 durch einen zusätzlichen, hinteren Achslenkerabschnitt 7 über den Achskörper 2 hinaus verlängert. Der Achslenker 5 ist daher insgesamt zweiteilig gestaltet und er setzt sich zusammen aus dem in Fahrtrichtung vorderen Achslenker sowie dem in Fahrtrichtung hinteren, zusätzlichen Achslenkerabschnitt 7, an dem sich die Auflagefläche für die Luftfeder 9 befindet. Bei der Montage des Fahrwerks werden über Klemmkräfte der vordere Teil des Achslenkers 5 und der Achslenkerabschnitt 7 miteinander und mit dem Achskörper 2 verbunden. Der vordere Teil des Achslenkers 5 erstreckt sich dabei von dem Lagerauge 1A des Schwenklagers in der Stütze 1 bis zu dem Achskörper 2.

Die Zweiteiligkeit des Achslenkers ist von Vorteil, da durch Auswahl der Länge einerseits des Achslenkers 5 und andererseits des hinteren Achslenkerabschnitts 7 die fahrzeugspezifischen Abstände zwischen dem Schwenklager, dem Achskörper 2 und der Luftfeder 9 individuell, d. h. kundenspezifisch, realisierbar sind.

Der Achslenker 5 besteht aus Metallguss und vorzugsweise aus einem Sphäroeisenguss, insbesondere aus dem Werkstoff Kugelgrafitguss GCS. Auch der hintere Achslenkerabschnitt 7 besteht aus Metallguss und vorzugsweise aus einem Sphäroeisenguss, insbesondere aus dem Werkstoff Kugelgrafitguss GCS. Ebenfalls als besonders geeignet hat sich der Eisengusswerkstoff GJS erwiesen, und hier vor allem jener mit der Bezeichnung EN-GJS-600-3. Dieser zur Gruppe der Sphäroguss-Materialien gehörende Werkstoff zeichnet sich durch kugelförmig eingelagertes Graphit aus. Diese Materialstruktur bedingt eine hohe Festigkeit des Materials und hat beim Oberflächenstrukturieren mittels eines Festkörperlasers den Vorteil, dass das umgeschmolzene Material im Bereich der Struktur eine sehr hohe Härte aufweist, bei gleichzeitig zähen Materialeigenschaften.

Der Achskörper 2 ist an seinem fahrzeugäußeren Ende mit einem Achsschenkel 8 zur Lagerung eines Fahrzeugrades versehen.

Vorzugsweise ist der Achskörper als ein langgestrecktes Achsrohr ausgebildet. In diesem Fall ist er an seinen beiden Enden mit Achsschenkeln zur Lagerung der jeweiligen Radnaben mit den daran befestigten Fahrzeugrädern versehen. Das Achsrohr ist hier insgesamt von Rechteckquerschnitt mit vier Seiten und gerundeten Übergängen zwischen den Seiten. Das Achsrohr kann z. B. aus zwei miteinander längsverschweißten U-Profilen bestehen. Seine Außenseite 15 ist unbehandelt. Insbesondere ist sie nicht künstlich aufgeraut.

Zum Einklemmen des Achskörpers 2 zwischen dem Achslenker 5 und dem hinteren Achslenkerabschnitt 7 ist der Achslenker 5 mit einer Schale 10 versehen, die breiter ist als der Achslenker 5. Der Achslenkerabschnitt 7 ist ebenfalls mit einer Schale 20 versehen, die breiter ist als dieser Achslenkerabschnitt. Die Schalen 10, 20 sind jeweils einstückiger Bestandteil des Achslenkers 5 bzw. des Achslenkerabschnitts 7. Für einen optimalen Kraftverlauf im Bereich der Achseinbindung ist die Gussgestaltung so, dass der Achslenker 5 nach schräg unten auf seine Schale 10, und der Achslenkerabschnitt 7 nach schräg oben auf seine Schale 20 stößt.

Die beiden Schalen 10, 20 erstrecken sich längs des Achskörpers 2. Sie weisen an ihrer dem Achskörper 2 zugewandten Innenseite jeweils einen ersten Innenseitenabschnitt und einen gemeinsam mit dem ersten Innenseitenabschnitt einen Eckwinkel von ca. 90° bildenden zweiten Innenseitenabschnitt auf. Die Abstützung des Achslenkers 5 und des Achslenkerabschnitts 7 gegen die unbehandelte Außenseite 15 des Achskörpers 2 erfolgt nicht auf der ganzen Fläche der Innenseite, sondern nur in der dem Eckwinkel abgewandten Randzone des jeweiligen Innenseitenabschnitts. In dieser Randzone ist an jeder der zwei Innenseitenabschnitte der Schale 10 und der Schale 20 ein sich überwiegend in Längsrichtung des Achskörpers 2 erstreckender Vorsprung in Form einer Stützleiste 10A ausgebildet. Diese bildet einen Stützbereich 11, 12, 13, 14. Nur an diesem Stützbereich 11, 12, 13, 14 und damit nur an der Stützleiste 10A findet der Kontakt zwischen dem einen Fahrwerkselement, also dem Achskörper 2, und dem anderen Fahrwerkselement, also dem Achslenker 5 statt, bzw. zwischen dem Achskörper 2 und dem hinteren Achslenkerabschnitt 7.

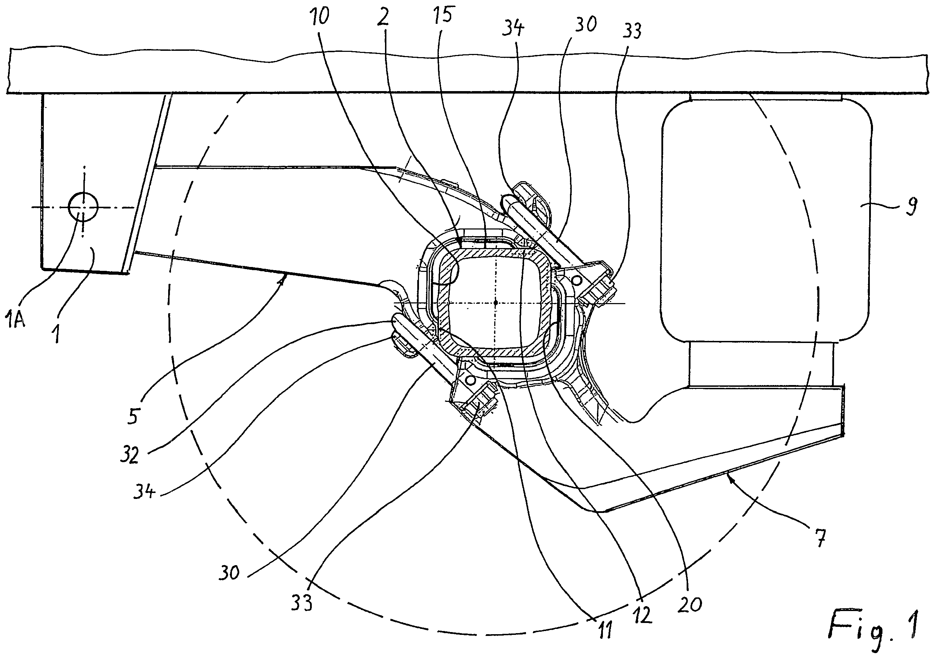

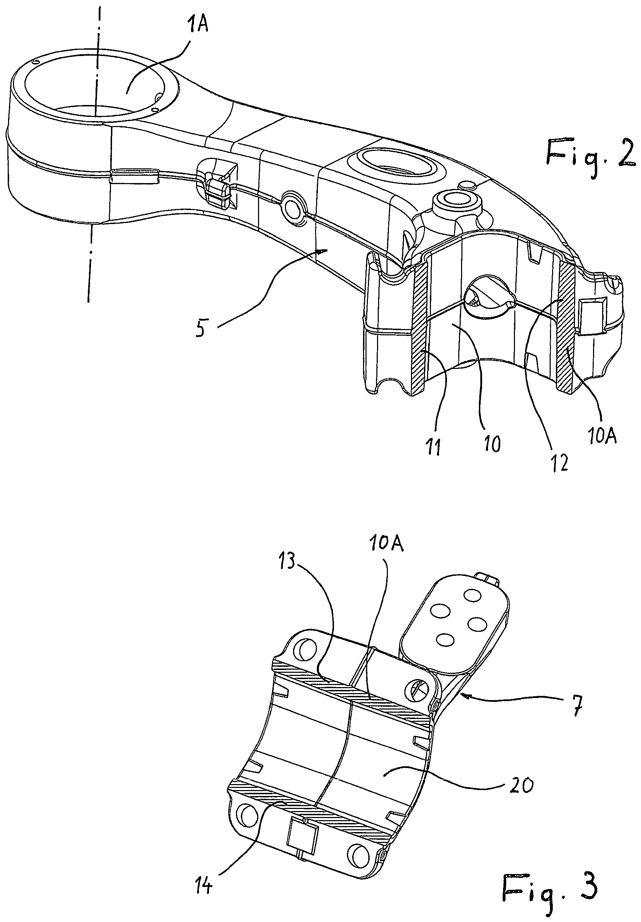

Die Stützbereiche 11, 12, 13, 14 befinden sich auf unterschiedlichen Umfangsabschnitten der Schalen 10, 20 und sind vor allem durch Umfangsabschnitte ohne Stützbereiche voneinander getrennt. Ergebnis dieser Gestaltung der Schalen 10, 20 ist ein nur partieller Kontakt zwischen Achslenker 5 und Achskörper 2 bzw. zwischen Achslenkerabschnitt 7 und Achskörper 2 dort, wo sich die Stützleisten 10A mit den Stützbereichen befinden. Große Bereiche der Innenseite der beiden Schalen 10, 20 hingegen nehmen an diesem Kontakt nicht teil. Fig. 1 lässt erkennen dass, da der Achskörper 2 von Rechteckquerschnitt mit vier Seiten und gerundeten Übergängen zwischen den Seiten ist, der erste Stützbereich 1 1 des Achslenkers 5 nur gegen eine erste, und der zweite Stützbereich 12 des Achslenkers 5 nur gegen eine zweite Seite des Achskörpers 2 abgestützt ist, wobei diese beiden Seiten des Achskörpers 2 einander benachbart sind. Analog ist der in Fig. 3 wiedergegebene Achslenkerabschnitt 7 mit einem ersten Stützbereich 13 nur gegen eine dritte, und mit einem zweiten Stützbereich 14 nur gegen eine vierte Seite des Achskörpers 2 abgestützt, wobei auch diese dritten und vierten Seiten des Achskörpers 2 einander benachbart sind.

Gemäß Fig. 2 und Fig. 3 sind die leistenförmig an dem Achslenker 5 angeformten Stützbereiche 11, 12, und ebenso die leistenförmig an dem Achslenkerabschnitt 7 angeformten Stützbereiche 13, 14 mit einer durch gezielte Laserbearbeitung dieser Flächen aufgerauten Oberflächenstruktur versehen. Bei Fig. 2 und Fig. 3 sind die Stützleisten 10A komplett, d. h. auf ihrer gesamten Fläche, mit der so aufgerauten Oberflächenstruktur versehen.

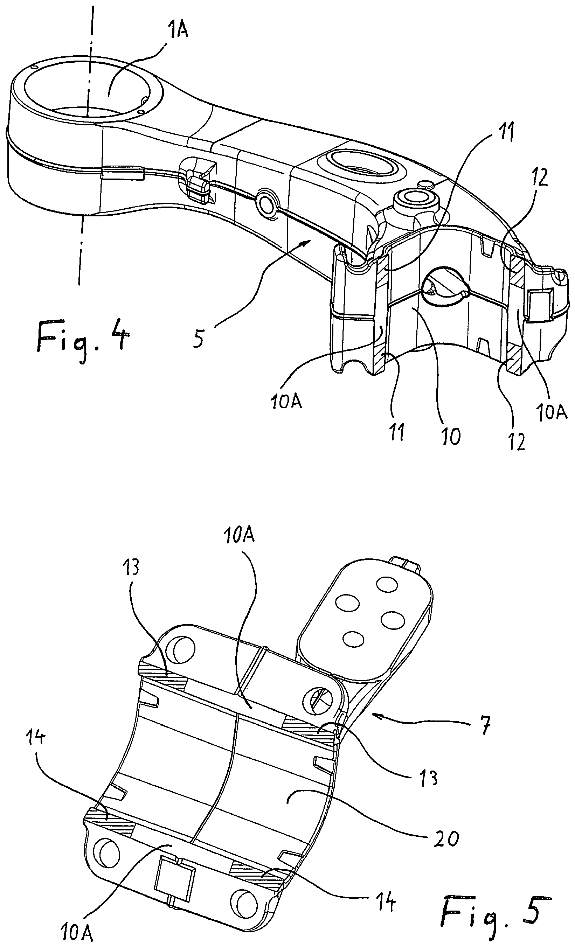

Bei der erfindungsgemäßen Ausführungsform nach Fig. 4 und Fig. 5 sind nur Teilflächen 11, 12, 13, 14 der Stützleisten 10A mit der aufgerauten Oberflächenstruktur versehen. Andere Teilflächen der Stützleisten 10A sind ohne diese Oberflächenstruktur, d. h. diese Teilbereiche wurden nicht durch Laserbearbeitung aufgeraut. Falls nur Teilflächen mit der aufgerauten Oberflächenstruktur versehen sind, sind dies solche Teilflächen, die zu den beiden Enden der Hauptlängserstreckung der Stützleisten hin gelegen sind, wie dies die Figuren 4 und 5 erkennen lassen. Das Bearbeiten der Stützflächen erfolgt vorzugsweise unter Einsatz eines Impulslasers. Dieser hat sich hinsichtlich des Werkstoffs Sphäroeisenguss, aus dem der Achslenker 5 und dessen Lenkerabschnitt 7 bestehen, als vorteilhafter erwiesen, als ein kontinuierlich arbeitender Laser. Von Vorteil ist es, wenn die Stützbereiche 11, 12, 13, 14 vor der Laserbehandlung durch eine spanende Bearbeitung, z. B. mittels eines Fräswerkzeuges, vorbereitet und hierbei geglättet werden. Diese Vorbereitung verbessert das Ergebnis der anschließenden Laserbearbeitung.

Bei der Laserstrahlbearbeitung kann der Laser mit Vorschubrichtung in Längsrichtung der Schalen 10, 20 betrieben werden, oder mit Vorschubrichtung quer zur Längsrichtung der Schalen 10, 20. Auch eine Strahlbehandlung zunächst in der einen Vorschubrichtung, dann in der hierzu quer angeordneten Vorschubrichtung ist möglich.

Die klemmende Einbindung des Achskörpers 2 zwischen Achslenker 5 und Achslenkerabschnitt 7 erfolgt durch das Anziehen von stangenförmigen Zugelementen 30, welche die eine Schale 10 unter Zwischenlage des Befestigungsabschnitts des Achskörpers 2 gegen die andere Schale 20 verspannen. Dieses Verspannen erfolgt unter einem schrägen Winkel zur Horizontalen.

Als Zugelemente 30 dienen zwei Gewindebügel, bestehend jeweils aus einem gebogenen Bügelabschnitt 32 und zwei stangenförmig geraden, zueinander parallelen Abschnitten, welche als die eigentlichen Zugelemente die Zugkraft übertragen. An ihren freien Enden sind die stangenförmigen Abschnitte mit Außengewinden versehen, auf die jeweils eine Gewindemutter 33 aufgeschraubt ist, die sich außen an der Schale 20 abstützt. Der Bügelabschnitt 32 jedes Gewindebügels ist um ein an dem Achslenker 5 angeformtes Widerlager 34 herum geführt. Bei dem Widerlager 34 handelt es sich um eine einstückig an dem Achslenker 5 angeformte Nase, die mit einer zu der Biegung des Bügelabschnitts 32 korrespondierenden Rille versehen ist. Durch die Anordnung der Gewindebügel quer zu dem Achsrohr 2 wird erreicht, dass sich im Bereich der Achseinbindung die stangenförmigen Zugelemente 30 im Wesentlichen längs des Verlaufs von Achslenker 5 und Achslenkerabschnitt 7 erstrecken, und sich die Enden der Zugelemente mit den dort aufgeschraubten Gewindemuttern 33 nach hinten und schräg unten erstrecken. Durch diese Anordnung wird eine optimal geschützte Lage der Zugelemente 30 und vor allem der Gewindemuttern 33 erreicht. Durch das zumindest partielle Aufrauen der Stützbereiche 11, 12, 13, 14 mittels des beschriebenen Strahlverfahrens kommt es zu einem dauerhaft festen Sitz in den Zonen unmittelbaren Kontakts zwischen den innen an dem Achslenker 5 ausgebildeten Stützbereichen und der unbehandelten, vergleichsweise glatten Außenseite 15 des Achskörpers 2. Gleiches gilt für den Achslenkerabschnitt 7. Auf diese Weise ist ein sicheres Übertragen der Betriebskräfte gewährleistet, ohne dass es zu einem dauerhaften, d. h. bleibenden Versatz kommt, sei dies in Längsrichtung der Achse oder auch in Achsenumfangsrichtung.

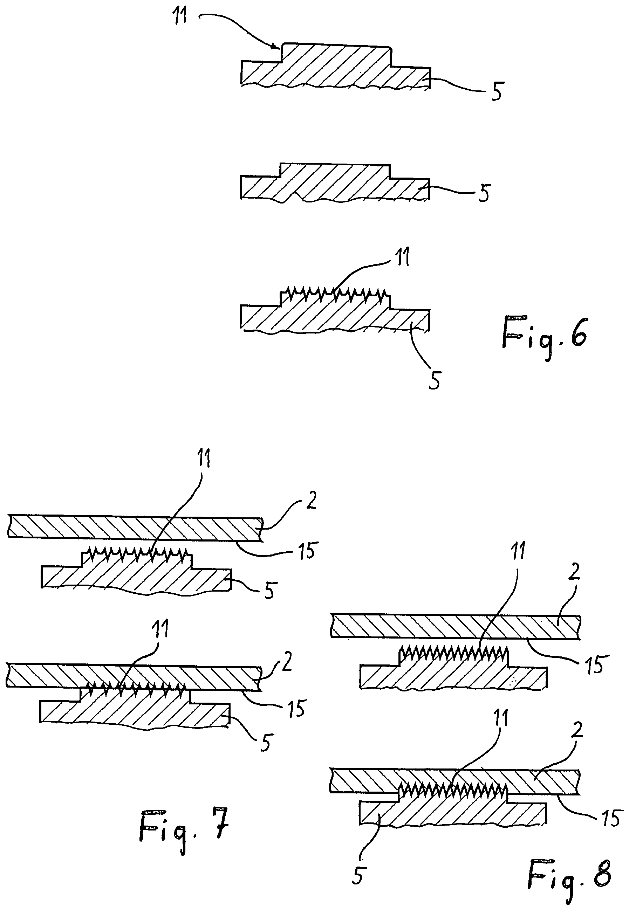

Bei dem hier beschriebenen Befestigungsverfahren kommt es, wie in Fig. 7 und in Fig. 8 wiedergegeben, durch das Anziehen der Zugelemente 30 zu einem Eingraben der Spitzen der durch die Strahlbearbeitung aufgerauten und gehärteten Oberflächenstruktur in die unbehandelte und daher vergleichsweise glattere Außenseite des Achskörpers 2. Der so erzielte Kontakt findet nur an den Stützbereichen 11, 12, 13, 14 statt, nicht außerhalb der Stützbereiche.

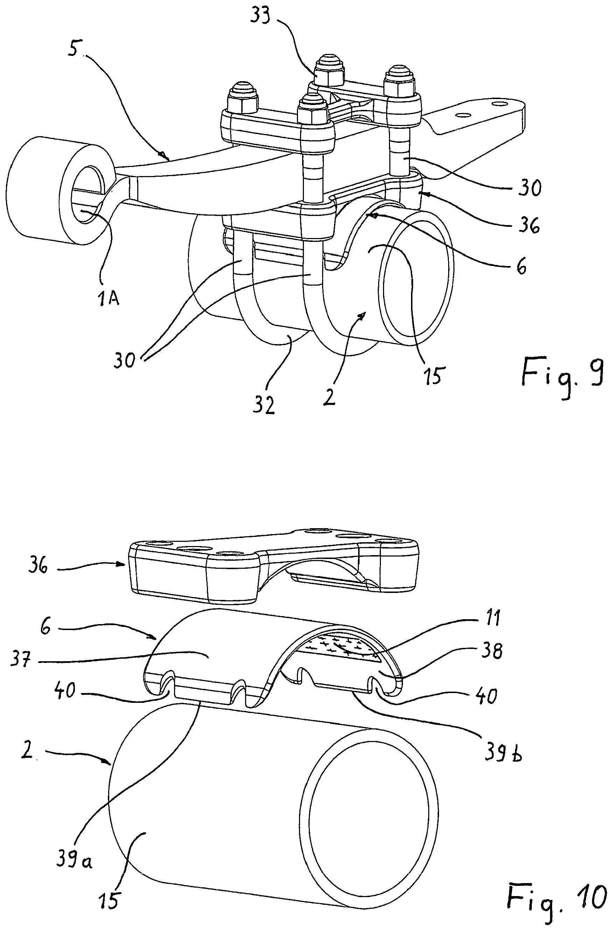

In den Figuren 9 - 1 1 ist ein anderes nicht erfindungsgemäßes Beispiel der Achsanbindung wiedergegeben, hier in Kombination mit einem als Rundrohr gestalteten Achskörper 2, von dem in Fig. 9 nur ein kurzer Längsabschnitt wiedergegeben ist. Der Achslenker 5 ist hier nicht zweiteilig gestaltet, sondern einteilig, und er besteht hier aus einem Federstahl, was dem Achslenker 5 eine gewisse eigene Elastizität und Verformbarkeit verleiht.

Zwischen dem Achslenker 5 und dem quer hierzu angeordneten Achskörper 2 sind zwei Fahrwerkselemente angeordnet und eingeklemmt, nämlich eine gebogene Achsschale 6 und ein als Gussformteil oder Schmiedeteil gestalteter Achslappen 36. Der Achslappen 36 liegt bei montierter Achsanbindung, wie in Fig. 9 wiedergegeben, von unten gegen den Achslenker 5 an. Die Unterseite des Achslappens 36 ist schalenförmig gestaltet, wobei die Schalenkontur identisch oder nahezu identisch zu der Außenseite 37 der Achsschale 6 ist. Auch die Innenseite 38 der Achsschale 6 weist den gebogenen Verlauf auf, und dieser ist identisch oder nahezu identisch zu der Außenkontur des runden Achskörpers 2. Die Achsschale 6 umschließt daher mit ihrer gebogenen Innenseite 38 den Achskörper 2 auf einem Teil von dessen Umfang, und maximal auf der Hälfte des Umfangs des Achskörpers 2. Mittels zweier Gewindebügel werden die genannten Fahrwerksteile gegeneinander gespannt und damit geklemmt. Insbesondere kommt es zu einem Verklemmen der gebogenen Achsschale 6 mit dem Achskörper 2. Für eine verbesserte Verbindung zwischen der Innenseite 38 der Achsschale 6 und der Außenseite 15 des Achskörpers 2 ist die Achsschale 6 an der Innenseite 38 mit den aufgerauten Stützbereichen 11, 12 versehen, wobei die Aufrauhung durch die Bearbeitung der Stützbereiche 11, 12 in dem voranstehend bereits beschriebenen Strahlverfahren erzielt wird. Daher besteht die Achsschale 6 aus einem der oben bereits angegebenen Sphäroeisenguss-Werkstoffe. Die Achsschale 6 ist an den in Umfangsrichtung des Biegeverlaufs der Achsschale vorderen und hinteren Rändern 39a, 39b, die sich längs des Achskörpers 2 erstrecken, mit Ausnehmungen 40 versehen. Durch die Ausnehmungen 40 erstrecken sich die stangenförmigen Zugelemente 30 der Gewindebügel zumindest teilweise hindurch. Hierdurch wird die Achsschale 6 in Längsrichtung des Achskörpers an den Zugelementen und damit auch gegenüber dem Achslenker 5 fixiert. Die Achsschale 6 ist daher in der Lage, in Längsrichtung des Achskörpers Kräfte aufzunehmen und an den Achslenker 5 zu übertragen. Auch bei längerem Einsatz ist ein Versatz des Achskörpers in dieser Längsrichtung ausgeschlossen. Die vier Ausnehmungen 40 an der Achsschale 6 sind für die spielarme Hindurchführung der stangenförmigen Zugelemente 30 von U-förmiger oder V-förmiger Kontur.

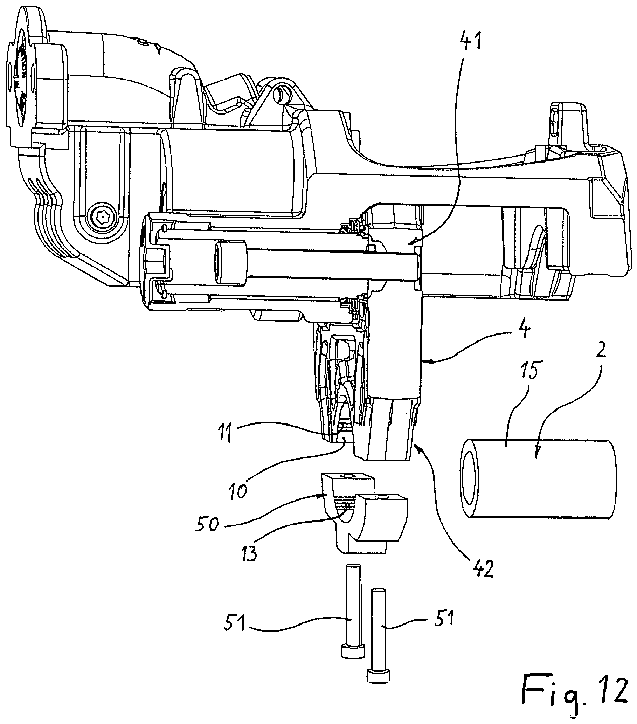

In Fig. 12 ist ein weiteres nicht erfindungsgemäßes Beispiel des Nutzfahrzeug-Fahrwerks wiedergegeben. Das erste Fahrwerkselement ist wiederum das Achselement, hier mit dem Querschnitt eines runden Achsrohrs. Hingegen ist das zweite Fahrwerkselement hier der Bremsträger 4 der Nutzfahrzeug-Scheibenbremse.

Der Bremsträger 4 weist einen Trägerabschnitt 41 für die Befestigung und / oder Lagerung von Funktionselementen einer Scheibenbremse auf, zum Beispiel für die Befestigung und Lagerung des Bremssattels der Scheibenbremse. Ferner weist der Bremsträger einen Befestigungsabschnitt 42 für die starre Fixierung des Bremsträgers 4 an dem Achselement auf. Dieser Befestigungsabschnitt 42 ist hier die gebogene Schale 10, welche zur unmittelbaren Anlage gegen das Achselement, also den Achskörper 2, ausgebildet ist. Der die Schale 10 aufweisende Befestigungsabschnitt 42 wird mit einer Gegenschale 50 zu einem dann geschlossenen und dabei das Achselement 2 einklemmenden Ring verbunden, z. B. mittels Schrauben 51. An der Innenseite der Schale 10 und vorzugsweise auch der Gegenschale 50 sind jeweils partiell die Aufrauhungen in Form der durch Strahlbearbeitung erzeugten Stützbereiche 11, 12, 13, 14 ausgebildet.

Wiederum bestehen der Bremsträger 4 und vorzugsweise auch die Gegenschale 50 aus dem bereits beschriebenen, in dem Strahlverfahren aufgerauten Sphärostahlguss, insbesondere aus Kugelgrafitguss GJS oder GCS.

### Bezugszeichenliste

| | | | | | |
|---|---|---|---|---|---|
| 1 | Lenkerstütze | 10 | Schale | 34 | Widerlager |
| 1A | Lagerauge | 10A | Stützleiste | 36 | Achslappen |
| 2 | erstes Fahrwerkselement, Achskörper | 11 | Stützbereich | 37 | Außenseite |
| | | 12 | Stützbereich | 38 | Innenseite |
| 4 | zweites Fahrwerkselement, Bremsträger | 13 | Stützbereich | 39a | Rand |
| | | 14 | Stützbereich | 39b | Rand |
| 5 | zweites Fahrwerkselement, Achslenker | 15 | Außenseite Achskörper | 40 | Ausnehmung |
| 6 | zweites Fahrwerkselement, Achsschale | 20 | Schale | 41 | Trägerabschnitt |
| | | 30 | Zugelement, Gewindebügel | 42 | Befestigungsabschnitt |
| 7 | Achslenkerabschnitt | 32 | Bügelabschnitt | 50 | Gegenschale |
| 9 | Luftfeder | 33 | Gewindemutter | 51 | Schraube |

## Patentansprüche

1. Fahrwerk für ein Nutzfahrzeug, wobei das Fahrwerk ein sich quer zur Fahrzeuglängsrichtung erstreckendes erstes Fahrwerkselement (2) und ein auf dessen Außenseite (15) befestigtes zweites Fahrwerkselement (5) aufweist, wobei das zweite Fahrwerkselement (5) über mindestens einen aufgerauten Stützbereich (11, 12) gegen die Außenseite (15) des ersten Fahrwerkselements (2) abgestützt ist,
wobei das zweite Fahrwerkselement ein an dem Fahrzeugchassis des Nutzfahrzeugs schwenkbar gelagerter Achslenker (5) ist,
wobei der aufgeraute Stützbereich (11, 12) innen an einer Schale (10) ausgebildet ist, die Bestandteil des zweiten Fahrwerkselements (5) ist und sich über einen Teilumfang des ersten Fahrwerkselements (2) erstreckt,
wobei sich der aufgeraute Stützbereich (11, 12) in Umfangsrichtung nur über einen Teilumfang der Schale (6, 10) erstreckt,
**dadurch gekennzeichnet, dass**
die Aufrauhung aus einer durch Bearbeiten des Stützbereichs (11, 12) mittels eines Festkörperlasers erzeugten Oberflächenstruktur besteht,
wobei sich der aufgeraute Stützbereich (11, 12) in Längsrichtung des ersten Fahrwerkselements (2) nur über einen Teil der Länge der Schale (6, 10) erstreckt, , und
wobei der Stützbereich (11, 12) vor der Laserbehandlung durch eine spanende Bearbeitung vorbereitet und geglättet ist.

2. Fahrwerk nach Anspruch 1, **dadurch gekennzeichnet, dass** das zweite Fahrwerkselement (4, 5) aus Sphäroeisenguss besteht.

3. Fahrwerk nach Anspruch 2, **dadurch gekennzeichnet, dass** das zweite Fahrwerkselement (4, 5) aus dem Sphäroeisenguss-Werkstoff GJS oder dem Sphäroeisenguss-Werkstoff GCS besteht.

4. Fahrwerk nach Anspruch 1 - 3, **dadurch gekennzeichnet, dass** die Aufrauhung aus einer durch Bearbeiten des Stützbereichs (11, 12) mittels eines mit einer Pulsenergie von maximal 80 mJ gepulsten Festkörperlasers erzeugten Oberflächenstruktur besteht.

5. Fahrwerk nach einem der Ansprüche 1 bis 4, **dadurch gekennzeichnet, dass** die Oberflächenstruktur der Aufrauhung durch sich abwechselnde Spitzen und Täler bestimmt ist, und dass die Ebene, in der die Täler überwiegend angeordnet sind, sich näher zu dem ersten Fahrwerkselement (2) befindet, als die Innenseite der Schale (10).

## Claims

1. Running gear for a commercial vehicle, the running gear having a first running gear element (2) extending transversely to the vehicle longitudinal direction and a second running gear element (5) fastened to its outer side (15),
the second running gear element (5) being supported against the outer side (15) of the first running gear element (2) by means of at least one roughened support region (11, 12),
the second running gear element being an axle link (5) pivotably mounted on the vehicle chassis of the commercial vehicle,
the roughened support region (11, 12) being formed on the inside of a shell (10) which is a component of the second running gear element (5) and extends over a partial circumference of the first running gear element (2),
the roughened support region (11, 12) extending in the circumferential direction only over a partial circumference of the shell (6, 10),
**characterized in that**
the roughening consists of a surface structure produced by machining the support region (11, 12) by means of a solid-state laser,
the roughened support region (11, 12) extending in the longitudinal direction of the first running gear element (2) only over a portion of the length of the shell (6, 10), and
the support region (11, 12) being prepared and smoothed by machining before the laser treatment.

2. Running gear according to claim 1, **characterized in that** the second running gear element (4, 5) consists of spheroidal cast iron.

3. Running gear according to claim 2, **characterized in that** the second running gear element (4, 5) consists of the spheroidal cast iron material GJS or the spheroidal cast iron material GCS.

4. Running gear according to claims 1 to 3, **characterized in that** the roughening consists of a surface structure produced by machining the support region (11, 12) by means of a solid-state laser which is pulsed with a pulse energy of at most 80 mJ.

5. Running gear according to any of claims 1 to 4, **characterized in that** the surface structure of the roughening is defined by alternating peaks and valleys, **and in that** the plane in which the valleys are predominantly arranged is located closer to the first running gear element (2) than the inside of the shell (10).

## Revendications

1. Train de roulement pour un véhicule utilitaire, dans lequel le train de roulement présente un premier élément de train de roulement (2) s'étendant transversalement à la direction longitudinale du véhicule et un deuxième élément de train de roulement (3) fixé sur son côté extérieur
(15), dans lequel le deuxième élément de train de roulement (5)
est supporté contre le côté extérieur (15) du premier élément de train de roulement (2) par l'intermédiaire d'au moins une zone de support rendue rugueuse (11, 12),
dans lequel le deuxième élément de train de roulement est un bras d'essieu (5) logé de manière pivotante sur le train de roulement de véhicule du véhicule utilitaire,
dans lequel la zone de support rugueuse (11, 12) est réalisée à l'intérieur sur une coque (10) qui fait partie du deuxième élément de train de roulement (5) et s'étend sur une partie de la circonférence du premier élément de train de roulement (2),
dans lequel la zone de support rendue rugueuse (11, 12) s'étend dans la direction circonférentielle uniquement sur une partie de la circonférence de la coque (6, 10),
**caractérisé en ce que**
la rugosité est constituée d'une structure de surface produite par l'usinage de la zone de support (11, 12) au moyen
d'un laser à solide,
dans lequel la zone de support rugueuse (11, 12) s'étend dans la direction longitudinale du premier
élément de train de roulement (2) uniquement sur une partie de la longueur de la coque (6, 10), et
dans lequel la zone de support (11, 12) est préparée et lissée par un usinage par enlèvement de copeaux avant le traitement au laser.

2. Train de roulement selon la revendication 1, **caractérisé en ce que** le deuxième élément de train de roulement (4, 5) est constitué de fonte à graphite sphéroïdal.

3. Train de roulement selon la revendication 2, **caractérisé en ce que** le deuxième élément de train de roulement (4, 5) est constitué du matériau de fonte à graphite sphéroïdal GJS ou du matériau de fonte à graphite sphéroïdal GCS.

4. Train de roulement selon la revendication 1 à 3, **caractérisé en ce que** la rugosité est constituée d'une structure de surface produite par usinage de la zone de support (11, 12) au moyen d'un laser à solide pulsé avec une énergie d'impulsion de 80 mJ maximum.

5. Train de roulement selon l'une quelconque des revendications 1 à 4, **caractérisé en ce que** la structure de surface de la rugosité est définie par une alternance de pics et de creux, et **en ce que** le plan dans lequel les creux sont majoritairement disposés est situé plus près du premier élément de train de roulement (2) que la face interne de la coque (10).
